# EUROPÄISCHE PATENTSCHRIFT

(11) **EP 1 775 158 B1**
(45) Veröffentlichungstag und Bekanntmachung des Hinweises auf die Patenterteilung: **17.09.2008**
(21) Anmeldenummer: 05022403.9
(22) Anmeldetag: 13.10.2005
(51) Int. Cl.: B60P 1/44

(54) **Ladebordwandsystem zur Befestigung an Hilfsrahmen von Fahrzeugen**
Loading tailgate system for fastening on a vehicle subframe
Système de hayon élévateur pour fixer sur un chassis auxiliaire de véhicule

(43) Veröffentlichungstag der Anmeldung: 18.04.2007
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole

(56) Entgegenhaltungen:
- EP-A- 1 162 111
- DE-A1- 4 114 705
- DE-A1- 10 143 591
- DE-U1-4202004 014 72
- US-A- 2 725 152

## Beschreibung

Die Erfindung betrifft ein Ladebordwandsystem zur Befestigung an Fahrzeugen, insbesondere Lastkraftwagen, wobei zwei im wesentlichen parallel beabstandete Trägerelemente einen Fahrzeugrahmen bilden, umfassend wenigstens ein im wesentlichen parallelogrammförmiges, aus zwei im wesentlichen parallel voneinander beabstandeten Tragwerken bestehendes Hubtragwerk, eine im wesentlichen plattenförmige Ladebordwand zum Heben und Absenken einer Last und wenigstens einen Hubaktuator zum Heben und Senken der Ladebordwand, und wobei die Befestigung des ersten und des zweiten Tragwerks über jeweils ein gesondertes Befestigungselement erfolgt, das an dem Trägerelement und im wesentlichen vertikal oben auf den Trägerelementen befestigbaren Hilfsrahmen befestigbar ist.

Ein Ladebordwandsystem dieser Art ist bekannt (DE-U-20 2004 014 724). Hier erfolgte die Befestigung des Ladebordwandsystems mit einer flanschähnlichen Befestigungseinrichtung, die dort Aufhängevorrichtung genannt wird, einerseits mittels einem unteren Adapterteil an dem Fahrgestellrahmenprofil und andererseits mittels einem oberen Adapterteil an dem Hilfsrahmen, der dort Aufbaurahmen genannt wird. Zwar ist in dem Dokument auch eine Ausgestaltung des Befestigungselementes (Aufhängevorrichtung) bekannt, die mittels Schraubbolzen sowohl mit den Trägerelementen (Fahrgestellrahmenprofil) als auch an dem Hilfsrahmen (Aufbaurahmen) befestigt ist, wobei aber diese bekannte Ausführung der Befestigung des Befestigungselementes des Ladebordwandsystems einen bis dahin allgemeinen bekannten Stand der Technik der Befestigung des Befestigungselementes an den Trägerelementen (Fahrgestellrahmenprofil) und am Hilfsrahmen (Aufbaurahmen) beschreibt. Bei dem in dem Dokument in den Schutzansprüchen beanspruchten Ladebordwandsystem erfolgt die Befestigung des Ladebordwandsystems über das Befestigungselement (Aufhängevorrichtung) mittels dem besagten gesonderten unteren Adapterteil am Trägerelement (Fahrgestellrahmenhutprofil) und andererseits mittels dem zweiten oberen Adapterteil an dem Hilfsrahmen (Aufbaurahmen).

Ein Ladebordwandsystem ähnlicher Art ist bekannt (EP-B-0 808 747). Ein plattenförmiges Befestigungselement, über das die Befestigung des ersten und des zweiten Tragwerks am Rahmen ohne Zwischenschaltung weiterer Konstruktionselemente erfolgt, ist insbesondere aus der EP-B-1 000 802, das aus einer Teilung des gattungsbildenden Patentes gemäß der EP-B-0 808 747 hervorgegangen ist, bekannt.

Aus der US-A-2 725 152 ist ein Ladebordwandsystem bekannt, das integral mit dem Fahrzeugrahmen eines Lastkraftwagens ausgebildet ist, das deshalb keine gesonderten Befestigungselemente für das Ladebordwandsystem benötigt und ein wie auch immer gearteter Hilfsrahmen im Sinne der Definition gem. der erfindungsgemäßen Gattung (Oberbegriff) nicht vorhanden ist, da ebenfalls nicht benötigt.

Die in beiden Patenten beschriebenen Ladebordwandsysteme können derart konstruktiv ausgestaltet sein, daß sowohl ein Heben und Absenken der Ladebordwand als auch ein Klappen der Ladebordwand von der Horizontalen in die Vertikale und umgekehrt möglich ist, die Ladebordwandsysteme können aber auch derart ausgestaltet sein, daß lediglich ein Anheben und Absenken der Ladebordwand möglich sein soll, d.h. keine Klappfunktion der Ladebordwand von der Horizontalen und die Vertikale erfolgen soll. Solche letzteren Ladebordwandsysteme weisen in der Regel eine klapp- bzw. faltbare Ladebordwand auf, die bei Nichtgebrauch unter dem hinteren Ende des Fahrzeugs verstaut wird, wenn der Ladevorgang abgeschlossen ist. Beide vorbeschriebenen Ladebordwandsysteme werden von der nachfolgend beschriebenen Erfindung umfaßt.

Die zuvor beschriebenen, in der Ausgestaltung konstruktiv unterschiedlichen Ladebordwandsysteme werden in der Regel von anderen Herstellerbetrieben hergestellt als die eigentlichen Kraftfahrzeuge, an denen die Ladebordwandsysteme zum bestimmungsgemäßen Betrieb zu befestigen bzw. anzubauen sind. Die Konstruktionsprinzipien der unterschiedlichen Fahrzeughersteller im Hinblick auf das Chassis des Fahrzeugs, insbesondere des regelmäßig dabei vorhandenen gesonderten Fahrzeugrahmens, variieren von Fahrzeughersteller zu Fahrzeughersteller zum Teil sehr erheblich und variiert zudem noch erheblich in Abhängigkeit der Größe des Fahrzeugs.

Während bspw. große Lastkraftwagen als Fahrzeugrahmen regelmäßig parallel voneinander beabstandete, im Querschnitt C-förmige oder doppelt-T-förmige Fahrzeugrahmen aufweisen, an denen die gattungsgemäßen Ladebordwandsysteme in der Regel problemlos befestigt werden können, bspw. mittels Bolzen-Mutter-Verbindungen, und in der Regel dabei sogar auf vom Hersteller des Lastkraftfahrzeugs vorgesehene Befestigungslöcher in den C-Profilen bzw. den Doppelt-T-Profilen zurückgegriffen werden kann, d.h. Bohr-, Schweiß- und Trennarbeiten am Fahrzeugrahmen, wenn überhaupt zulässig, nicht nötig sind, gestaltet sich die Befestigung der gattungsgemäßen Ladebordwandsysteme an den Rahmen von Fahrzeugen sehr viel aufwendiger und schwieriger, je kleiner, bezogen auf die damit zu transportierende Nutzlast, die Lastkraftfahrzeuge sind. Andererseits besteht in zunehmendem Maße ein erheblicher Bedarf an mit dem gattungsgemäßen Ladebordwandsystemen auszurüstenden sog. Kleintransport-Lastkraftwagen, die im Bereich eines Gesamtgewichts von 3,5 t liegen, d.h. real im Bereich eines Gesamtgewichtes von ca. 2,8 t bis 5 t. Diese, im folgenden einfachheitshalber 3,5 t-Lastkraftfahrzeuge genannten Fahrzeuge, sind vielfach nach anderen konstruktiven Prinzipien aufgebaut als Lastkraftfahrzeuge bspw. mit einem Gesamtgewicht von 10 t bis 35 t.

Obwohl auch die 3,5 t-Lastkraftfahrzeuge regelmäßig einen Fahrzeugrahmen aufweisen, der entfernt vergleichbar ist mit den Fahrzeugrahmen großer Lastkraftfahrzeuge, sind die Fahrzeugrahmen an 3,5 t-Lastkraftwagen verständlicherweise im Hinblick auf die zu erreichende mechanische Festigkeit sehr viel graziler ausgebildet, da auch bei den Lastkraftwagen des 3,5 t-Typs in der Regel die Karosserie zur mechanischen Festigkeit des Fahrzeugs im Hinblick auf eine mögliche Torsion des Fahrzeugchassis, der Zuladungsfähigkeit und der gesamten Stabilität des Lastkraftfahrzeugs beiträgt, was im Kraftfahrzeugbau unter dem Stichwort "selbsttragende Karosserie" ein allgemeiner und für den Fachmann verständlicher Begriff ist.

Da die Rahmenkonstruktion dieser 3,5 t-Lastkraftfahrzeuge zudem, wie oben schon erwähnt, von Hersteller zu Hersteller sehr unterschiedlich gestaltet sind, gestaltet sich die Befestigung der regelmäßig im Hinblick auf ihre Konstruktion standardisierten Ladebordwandsysteme von Lastkraftfahrzeug zu Lastkraftfahrzeug und von Hersteller zu Hersteller regelmäßig sehr aufwendig.

Dabei ist zu berücksichtigen, daß der Abstand der regelmäßig vorhandenen beiden Trägerrahmen des 3,5 t-Lastkraftfahrzeugs in der Regel größer ist als bspw. bei den erwähnten Lastkraftfahrzeugen im Bereich der 10 t- bis 35 t-Klasse und die Rahmenelemente, die funktionell Trägerelemente sind, sind bei den kleinen Lastkraftfahrzeugen, wie oben schon erwähnt, sehr viel graziler ausgebildet. Zu dieser Problematik gesellt sich ebenfalls die Problematik, daß auch die Befestigung der gattungsgemäßen Ladebordwandsysteme an den Tragrahmen der 3,5 t-Lastkraftfahrzeugen ebenfalls ohne mechanische Beeinträchtigung der Tragrahmen durch Bohren, Schweißen und Schleifen und dgl. erfolgen muß, da derartige mechanische Beeinflussungen einerseits die Festigkeit der Tragkonstruktion des Lastkraftfahrzeugs negativ beeinträchtigen können und andererseits regelmäßig Ausgangspunkte von Korrosionsbildung sind, was auf alle Fälle zu vermeiden ist. Vielfach lassen auch nationale Normvorschriften eine mechanische Bearbeitung bzw. mechanische und thermische Beeinflussung von tragenden Teilen eines Fahrzeugs, bspw. der Rahmenkonstruktion, nicht zu.

Die vorangehend beschriebenen Rahmenkonstruktionen der besagten 3,5 t-Lastkraftfahrzeuge werden von den Lastkraftwagenherstellern oder den Betrieben, die auf das Chassis dieser Lastkraftfahrzeuge die Karosserie aufbauen oder eine einfache Ladepritsche, vielfach modifiziert, indem bspw., wie gattungsgemäß dargelegt, auf den werkseitig vorgesehenen Trägerelementen, die den eigentlichen Fahrzeugrahmen bilden, sog. Hilfsrahmen aufgebracht werden, die vertikal oben auf den Trägerelementen befestigt sind, die für die Befestigung des Ladebordwandsystems am Fahrzeug eine größere lichte Höhe zwischen dem Untergrund, auf dem das Fahrzeug steht bzw. fährt, und der Unterseite der Ladepritsche des Fahrzeugs gewährleistet. Durch diese größere lichte Höhe gestaltet sich die Befestigung des Ladebordwandsystems an mit derartigen den Fahrzeugrahmen bildenden Trägerelementen versehenen Fahrzeugen, auf denen die Hilfsrahmen auf vorbeschriebene Weise angeordnet sind, leichter, als in dem Fall, in dem die Hilfsrahmen fehlen.

Ist der Hilfsrahmen auf den rahmenbildenden Trägerelementen vorgesehen, sind bisherige Befestigungselemente, über die das Ladebordwandsystem am Fahrzeug befestigt wird, nicht ohne weiteres verwendbar.

Es ist somit Aufgabe der vorliegenden Erfindung ein Ladebordwandsystem der eingangs genannten Art zu schaffen, mit dem standardisierte Ladebordwandsysteme unterschiedlicher standardisierter Größen an insbesondere kleinen Lastkraftfahrzeugen, insbesondere der 3,5 t-Klasse, ohne aufwendige Hilfskonstruktionen befestigt werden können, und ohne daß es einer mechanischen Bearbeitung der Rahmenkonstruktion dieser kleinen Lastkraftfahrzeuge bedarf, wobei die Befestigung der Ladebordwandsysteme auf die gleiche einfache Weise vonstatten gehen können soll, wie dieses bei großen Lastkraftfahrzeugen der 10 t- bis 35 t-Klasse von Lastkraftfahrzeugen schon möglich war und ist, wobei zur Befestigung der Ladebordwandsysteme die eigentliche Konstruktion des Ladebordwandsystems gegenüber bisherigen Ladebordwandsystemen und ihre Befestigung nicht verlassen werden soll, und daß die Montage und ggf. Demontage des Ladebordwandsystems einfach vonstatten gehen soll und die Befestigungs- und ggf. Löseprinzipien bisheriger Ladebordwandsysteme nicht verlassen werden sollen und die Befestigung selbst auch im Hinblick auf die dafür erforderlichen Gestehungskosten gering bleiben.

Gelöst wird die Aufgabe der vorliegenden Erfindung dadurch, daß das Befestigungselement im am Fahrzeug befestigbaren Zustand in einer Ebene im wesentlichen parallel zu der durch die Trägerelemente aufgespannten Ebene im Querschnitt nach Art eines U-Profils ausgebildet ist, das wenigstens ein plattenförmiges Basisteil und wenigstens zwei von diesem winklig abstehende Schenkelteile aufweist, wobei das Befestigungselement ausschließlich am Hilfsrahmen befestigt ist und wobei das Befestigungselement an dem Ende, über das es am Hilfsrahmen befestigbar ist, kragarmartig ausgebildet ist.

Das Merkmal im Querschnitt nach Art eines U-Profiles wird nachfolgend einfachheitshalber mit U-profilförmig bezeichnet, bezieht sich aber immer auf die Definition des konstruktiven Aufbaus der Befestigungselemente gemäß der erfindungsgemäßen Lösung.

Der Vorteil der erfindungsgemäßen Lösung besteht im wesentlichen darin, daß standardisierte Größen von Ladebordwandsystemen der gattungsgemäßen Art über die im Querschnitt hier erfindungsgemäß U-profilförmig ausgebildeten Befestigungselemente am Hilfsrahmen befestigt werden können, wobei die erfindungsgemäße Lösung eine hochstabile Befestigung bei gleichzeitig geringem Werkstoffeinsatz und somit bei geringem Gewicht erlaubt. Unterschiedliche Abstände der beiden den Fahrzeugrahmen bildenden Trägerelemente und somit auch unterschiedliche Abstände der auf den Trägerelementen angeordneten Hilfsrahmen bei Fahrzeugen der 3,5 t-Klasse können dadurch ausgeglichen bzw. diesen begegnet werden, daß die Schenkel der U-profilförmig ausgebildeten Trägerelemente unterschiedlich hoch, bezogen auf den Basissteg des U-Profils, ausgebildet werden. Dieses kann fertigungstechnisch sowohl auf Seiten des Herstellers der Ladebordwandsysteme bei entsprechenden konstruktiven Vorgaben als auch auf Seiten der Unternehmen, die die Ladebordwandsysteme am Fahrzeug montieren, auf fertigungstechnisch einfache Weise bewerkstelligt werden, indem die Schenkel des U-Profils gemäß den konstruktiven Vorgaben in einer ganz bestimmten Höhe bzw. Länge ausgebildet werden. Ein weiterer wesentlicher Vorteil der erfindungsgemäßen Lösung ist der, daß aufgrund der U-profilförmigen Konstruktion der Trägerelemente auch verhältnismäßig hohe, d.h. im am Fahrzeug eingebauten Zustand vertikal hohe, Trägerelemente ausbildbar sind, die aber dennoch eine sehr große Stabilität aufweisen und sowohl ein geringes Biegeverhalten als auch ein geringes Torrsionsverhalten bei mechanischer Belastung, wenn das Ladebordwandsystem sich im bestimmungsgemäßen Betrieb befindet, aufweisen.

Die Ausgestaltung des Befestigungselementes hat zudem den Vorteil, daß dann, wenn der Abstand der beiden den Fahrzeugrahmen bildenden Trägerelemente bzw. der Abstand der beiden darauf befestigten Hilfsrahmen fahrzeugseitig sehr klein ist, was bei bestimmten Lastkraftfahrzeugen der 3,5 t-Klasse anzutreffen ist, die jeweiligen Kragarme der jeweiligen Befestigungselemente diese Differenz gegenüber im Hinblick auf die Trägerelemente größer beabstandete Rahmenelemente überbrücken können, ohne daß aufwendige Hilfskonstruktionen vorgesehen werden müssen. Faktisch ist auch in diesem Falle die Länge des Kragarmes durch eine entsprechende Ausbildung der Höhe der Stege des U-Profils herstellbar bzw. einstellbar, so daß auch für diese Ausgestaltung des Befestigungselements das eingangs beschriebene konstruktive Prinzip des erfindungsgemäßen Befestigungselementes nicht verlassen wird.

Das Ende, über das das Befestigungselement am Hilfsrahmen befestigt wird, d.h. das freie Ende des Kragarms, weist vorteilhafterweise einen Befestigungsflansch auf, wobei über diesen Befestigungsflansch das Befestigungselement dann am Hilfsrahmen über Bolzen- bzw. Schrauben-Mutter-Verbindungen mit dem Hilfsrahmen verbunden wird. Faktisch wird durch diese Konstruktion eine Befestigungsvariante geschaffen, die sich von der Einfachheit des Befestigungselementes bzw. der Befestigung an einem U-Träger bzw. einem Doppelt-T-Träger, wie er bei Lastkraftwagen der 10 t- bis 35 t-Klasse von Lastkraftfahrzeugen schon möglich war und ist, vergl. auch die obige gattungsbildende Art der Befestigung, nicht verlassen, so daß die Montage und die Demontage des Ladebordwandsystems, wie angestrebt, auf die gleiche einfache Weise vonstatten gehen kann.

Ein wesentliches Ziel bei den erfindungsgemäßen Ladebordwandsystemen ist, daß diese bei fortlaufend zu wahrender hohen Eigenstabilität, was sich auf alle Elemente des Ladebordwandsystems bezieht, neben der immerfort zu gewährleistenden vollen Funktionsfähigkeit des Ladebordwandsystems ein geringes Gewicht aufweisen sollen. Diese faktisch gegenläufigen Parameter führen zu der konstruktiv fortwährend zu beachtenden Konsequenz, daß alle Elemente des Ladebordwandsystems im Rahmen des technisch Möglichen unter Ausnutzung auch geeigneter Werkstoffe bzw. geeignet legierter Werkstoffe so gewichtssparend wie möglich auszubilden sind, was sowohl der Verminderung des vom Lastkraftfahrzeug fortwährend mitzutransportierenden Totgewichts als auch einer Verminderung der Gestehungskosten für derartige Ladebordwandsysteme zugute kommt. Aus diesem Grunde ist es äußerst vorteilhaft. daß der Befestigungsflansch im Querschnitt U-profilförmig ausgebildet ist, womit erreicht wird, daß durch diese Profilierung einerseits eine gegenüber einem plattenförmigen Befestigungsflansch sehr viel höhere Form- und Eigenstabilität erreicht werden kann und andererseits das Gewicht des Befestigungsflansches ebenfalls vermindert werden kann.

Bei einer weiteren vorteilhaften Ausgestaltung des Ladebordwandsystems ist das Befestigungselement im wesentlichen vertikal zu der durch die Trägerelemente gebildeten Ebene verstellbar ausgebildet, so daß Höhenunterschiede von unterschiedlichen Lastkraftfahrzeugen, insbesondere der 3.5 t-Klasse, d.h. des lichten vertikalen Abstandes zwischen dem den Rahmen bildenden Trägerelementen bzw. den vertikal darauf befestigten Hilfsrahmen und der Straßenoberfläche, auf dem der Lastkraftwagen steht, innerhalb eines beträchtlichen Längenintervalls auf einfache Weise durch entsprechende Verstellbarkeit überbrückt werden können.

Dieses kann bspw. dadurch bewirkt werden, daß die Drehachsen im Trägerelement, an denen die beiden Tragwerke am Befestigungselement angelenkt sind, in einer Mehrzahl verschiedener, vorkonfektionierter Löcher angeordnet werden können, es ist aber auch vorteilhafterweise möglich, das Befestigungselement aus zwei Befestigungsteilen auszubilden, die gegeneinander durch Verschiebung innerhalb eines voreinstellbaren bzw. konstruktiv vorgesehenen möglichen Verschiebungsintervalls zu verstellen sind.

Diese verstellbarkeit kann vorzugsweise durch Rastmittel erfolgen, die in den jeweiligen beiden Befestigungsteilen, die rastend zusammenwirken, vorgesehen sind, so daß innerhalb eines weiten Verstellbereiches die Befestigungselemente ohne zusätzliche mechanische Bearbeitung an die mit dem erfindungsgemäßen Ladebordwandsystem auszurüstenden Lastkraftwagen, insbesondere der Lastkraftwagen der 3,5 t-Klasse, angepaßt werden können.

Um die Variabilität der Befestigung des Ladebordwandsystems über die Befestigungselemente an den Lastkraftwagen, an denen sie bestimmungsgemäß befestigt werden sollen, auch im Falle insbesondere der Lastkraftfahrzeuge der 3,5 t-Klasse, zu erhöhen, sind die Drehachsen des ersten und des zweiten Tragwerks im jeweiligen Befestigungselement auf einem plattenförmigen Befestigungsträger ausgebildet, der auf dem Befestigungselement wiederum lösbar befestigbar ist.

Somit ist eine weitere Variabilität der Befestigung des Ladebordwandsystems geschaffen, d.h. mittels des plattenförmigen Befestigungsträgers kann sowohl in vertikaler Richtung eine unterschiedliche Höhe eingestellt werden als auch in Fahrzeuglängsrichtung eine Variabilität relativ zum Befestigungselement geschaffen werden, wobei dafür ein Lochraster sowohl im Befestigungselement als auch im plattenförmigen. Befestigungsträger vorgesehen sind, so daß geeignet Löcher für die geeignet gewählte vertikale Höhe und die geeignet gewählte Länge in Fahrzeuglängsrichtung ausgesucht bzw. festgelegt werden können.

Zweckmäßigerweise ist der Hilfsrahmen im Querschnitt im wesentlichen U-profilförmig ausgebildet. Grundsätzlich können die Hilfsrahmen, die auf den rahmenbildenden Trägerelementen vertikal oben angeordnet sind, einen beliebigen geeigneten Querschnitt aufweisen, bspw. in Form eines rechteckigen oder quadratischen Hohlrohres oder lediglich eines Winkelprofils. Die U-profilförmige Ausbildung des Hilfsrahmens hat aber gegenüber anderen Profilen den wesentlichen Vorteil, daß das U-Profil des Hilfsrahmens bei großer Eigenstabilität eine einfache Möglichkeit der Befestigung an den rahmenbildenden Trägerelementen ermöglicht, einer einfachen Befestigung der darauf zu liegen kommenden Ladepritsche eines Lastkraftfahrzeugs und, insbesondere bezogen auf die Befestigung des Ladebordwandsystems am Hilfsrahmen, eine einfache aber effektive Befestigung des Ladebordwandsystems über die Befestigungselemente erlaubt.

Der Hilfsrahmen im mit dem Trägerelement verbundenen Zustand ist zweckmäßigerweise derart positioniert, daß dieser im wesentlichen vertikal verlaufende Seiten aufweist, an denen die Befestigungselemente auf einfache Weise befestigt werden können, bspw. mittels Bolzen- bzw. Schrauben-Mutter-Verbindungen oder mittels Nietverbindungen.

Die Hilfsrahmen bestehen in der Regel aus einem Fe-Werkstoff, der geeignet legiert und/oder konditioniert sein kann. Regelmäßig besteht der aus den Trägerelementen gebildete Rahmen des Lastkraftfahrzeugs ebenfalls aus einem Fe-Werkstoff, wie er allgemein im Kraftfahrzeugbau, insbesondere im Lastkraftfahrzeugbau, verwendet wird. In den Staaten, in denen es zulässig ist, an rahmenbildenden Trägerelementen der Lastkraftfahrzeuge bzw. an den vertikal darauf oben angeordneten Hilfsrahmen die Befestigungselemente durch Schweißverbindungen zu befestigen, ist das Vorsehen der Hilfsrahmen aus Fe-Werkstoffen regelmäßig angeraten, so daß für eine derartige Schweißverbindung eine gegenseitige Werkstoffverträglichkeit gewährleistet ist.

In zunehmendem Maße gewinnen auch Leichtmetallwerkstoffe Einzug in den Kraftfahrzeugbau, insbesondere auch in den Lastkraftfahrzeugbau. So ist es schließlich zweckmäßig, wenigstens den Hilfsrahmen aus einem Leichtmetallwerkstoff auszubilden und den Hilfsrahmen aus Leichtmetall mittels Bolzen- bzw. Schrauben-Mutter-Verbindungen mit den rahmenbildenden Trägerelementen zu verbinden. Vorteilhaft kann es ebenfalls sein, Befestigungselemente gemäß der Erfindung vorzusehen, die ebenfalls aus Leichtmetallwerkstoffen hergestellt sind, was aufgrund der U-profilförmigen Ausgestaltung gemäß der Erfindung auch unter Stabilitätsgesichtspunkten ohne weiteres möglich ist. Das aus Leichtmetall-Werkstoff bestehende Befestigungselement kann dann in den Fällen, in denen es aufgrund nationalstaatlicher Vorschriften zulässig ist, mit dem aus Leichtmetall-Werkstoff bestehenden Hilfsrahmen durch Schweißen verbunden werden, da durch diese Kombination eine Werkstoffverträglichkeit gewährleistet ist.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebord-wandsystem gemäß dem Stand der Technik, das über Befestigungselemente, die Teil des Lade-bordwandsystems sind, an unmittelbar voneinander beabstandeten Trägerelementen, die ein C-Profil aufweisen, durch Klauen befestigt ist, wobei derartige Trägerelemente typischerweise bei großen Lastkraftfahrzeugen der Klasse 10 t bis 35 t verwendet werden,
- Fig. 2: in stark schematisierter Form einen Schnitt durch eine Ladefläche eines Lastkraftfahrzeuges, unter der ein Fahrzeugrahmen angeordnet ist, dessen Trägerelemente aus Hut- bzw. Doppelt-Hut-Profilen bestehen, auf denen ein U-profilförmig ausgebildeter jeweiliger Hilfsrahmen befestigt ist,
- Fig. 3: eine perspektivische Teildarstellung des erfindungsgemäßen Ladebordwandsystems, einen Teil des Hut- bzw. Doppelt-Hut-Profiles zeigend, auf dem der U-profilförmige Hilfsrahmen angeordnet ist,
- Fig. 4: in perspektivischer Darstellung eine erste Ausgestaltung des erfindungsgemäßen Befestigungselementes, das über einen Befestigungsflansch am Hilfsrahmen befestigt ist,
- Fig. 5: in perspektivischer Darstellung eine zweite Ausgestaltung des erfindungsgemäßen Befestigungselementes, bei dem ein Befestigungsflansch, über den das Befestigungselement mit dem Hilfsrahmen befestigt ist, im Querschnitt U-profilförmig ausgebildet ist,
- Fig. 6: in perspektivischer Darstellung eine dritte Ausgestaltung des erfindungsgemäßen Befestigungselementes, bei dem das Befestigungselement am Hilfsrahmen über einen Befestigungsflansch befestigt ist, wobei das Befestigungselement in unterschiedlichen vertikalen Positionen und in unterschiedlichen Positionen in Fahrtrichtung des Fahrzeugs befestigt werden kann, und wobei die Drehachsen des Befestigungselementes in einem plattenförmigen Befestigungsträger ausgebildet sind, und
- Fig. 7: in perspektivischer Darstellung eine vierte Ausgestaltung des Befestigungselementes, das aus zwei gegeneinander verschiebbaren und in den jeweiligen gewünschten Positionen verrastbaren Befestigungsteilen besteht, wobei das Befestigungselement über ein Flanschelement am Hilfsrahmen befestigt ist.

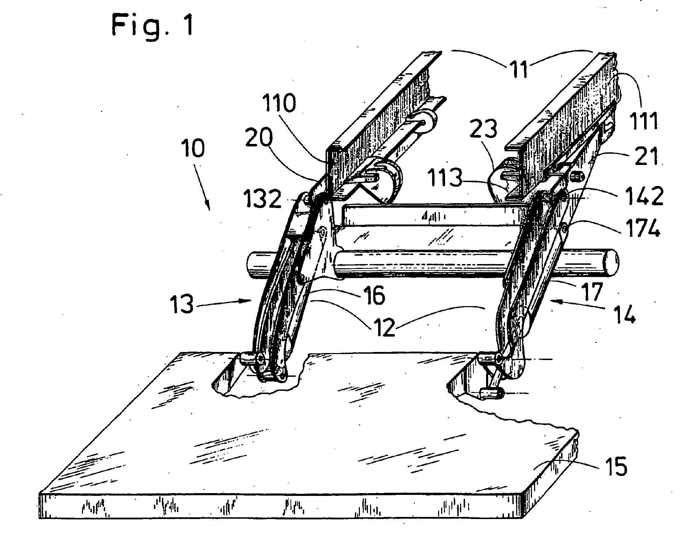

Das in Fig. 1 dargestellte Ladebordwandsystem 10. das im genannten gattungsbildenden Stand der Technik im einzelnen beschrieben worden ist (EP-B-1 000 802), weist ein Hub- und Klapptragwerk 12 auf, d.h. ein erstes Tragwerk 13 und ein zweites Tragwerk 14, wobei an das erste Tragwerk 13 geeignet ein Hubaktuator 16 und an das zweite Tragwerk 14 geeignet ein Klappaktuator 17 angelenkt sind.

Das in Fig. 1 dargestellte Ladebordwandsystem 10 ist somit sowohl zum Anheben einer mit dem Hub- und Klapptragwerk 12 verbundenen Ladebordwand 15 befähigt als auch zum Hochklappen der Ladebordwand 15 von der horizontalen Lage in die Vertikale und zum Herunterklappen von der Vertikalen in die horizontale Lage. Das nachfolgende beschriebenen Ladebordwandsystem 10 kann ein solches sein, wie es vorangehend skizziert worden ist, es kann aber auch ein solches sein, mit dem lediglich eine Hub- bzw. Absenkfunktion der Ladebordwand 15 bewirkt werden kann. Auf den generellen Aufbau des Ladebordwandsystems 10 wird nachfolgend lediglich in dem Umfang eingegangen, der notwendig ist, um das erfindungsgemäße Ladebordwandsystem zu verstehen.

Das in Fig. 1 dargestellte Ladebordwandsystem 10 umfaßt, wie gesagt, im wesentlichen ein Hub- und Klapptragwerk 12, das wiederum im wesentlichen aus einem ersten Tragwerk 13 und einem zweiten Tragwerk 14 besteht, das wiederum parallel voneinander beabstandet an einem Fahrzeug 11 über die Befestigungselemente 20, 21 befestigt ist. Das erste und das zweite Tragwerk 13, 14 bilden zusammen mit den Befestigungselementen 20, 21, das zweite Tragwerk 14 zusätzlich noch zusammen mit einem Klappaktuator 17, eine parallelogrammförmige Struktur. Mit dem ersten und dem zweiten Tragwerk 13. 14 ist die im wesentlichen plattenförmige Ladebordwand 15 zum Heben und Absenken einer Last (ohne Last dargestellt) und zum Verschließen eines Stauraumes des Fahrzeugs 11 drehbar verbunden. Mit dem ersten Tragwerk 13 wirkt ein Hubaktuator 16 zum Heben und Senken der Ladebordwand 15 zusammen. Ein Klappaktuator 17, der zum Verschwenken der Ladebordwand 15 von der Horizontalen in die Vertikale und umgekehrt dient, wirkt mit dem zweiten Tragwerk 14 zusammen und ist Teil seiner parallelogrammförmigen Struktur.

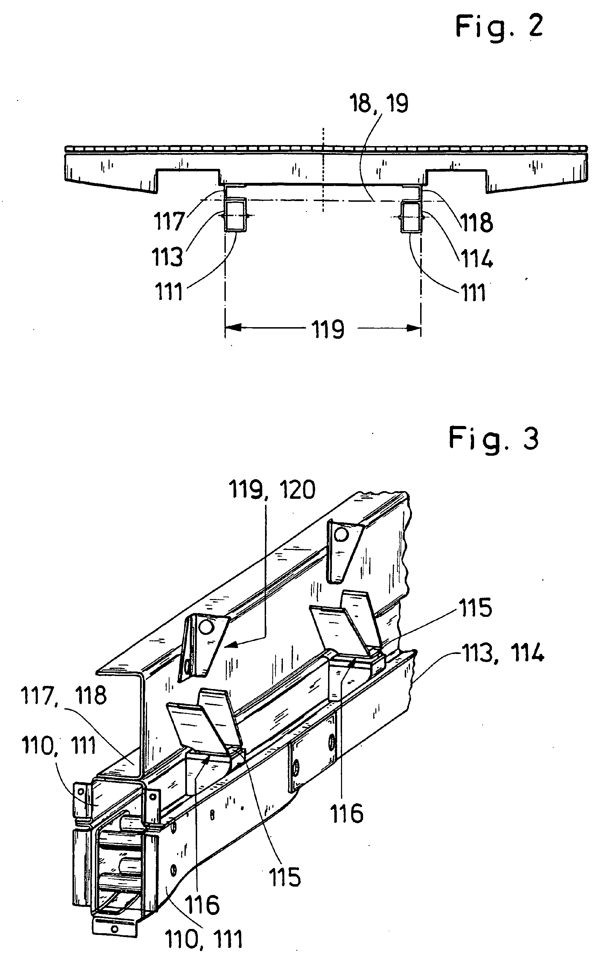

Teil der parallelogrammförmig strukturierten Tragwerke 13, 14 sind die jeweiligen Befestigungselemente 20, 21, vgl. auch die Fig. 2 und 3. Diese hier das Tragwerk 13, 14 ebenfalls mit umfassenden Befestigungselemente 20, 21 bestehen bspw. aus flachen, blechförmigen Elementen, vgl. Fig. 1, in denen Achsbuchsen 202 für die Drehachsen 132, 162 sowie 142, 174 auf geeignete Weise aufgenommen sind. Die Befestigung der Befestigungselemente 20, 21 am Tragrahmen 110, 111 kann, anders als in der Darstellung gemäß Fig. 1 gezeigt, auch über Schrauben-Mutter-Verbindungen erfolgen, wenn bspw. seitens des Herstellers des Lastkraftfahrzeugs 11 in den Tragrahmen 110, 111 geeignete Durchgangslöcher für diese Zwecke schon werkseitig schon vorgesehen worden sind. Ein weiteres Eingehen auf die im Stand der Technik bekannten, gattungsgemäßen Ladebordwandsysteme 10 gemäß Fig. 1 ist für das weitere Verständnis nicht erforderlich.

Fig. 2 zeigt in einer sehr schematischen Darstellung einen Schnitt durch die Ladefläche eines Lastkraftfahrzeugs 11 unter Weglassung aller hier für das Verständnis der Erfindung nicht nötigen Einzelheiten. Unterhalb der eigentlichen Ladefläche sind die Trägerelemente 110, 111, die den Fahrzeugrahmen bilden, beabstandet voneinander ausgebildet. Die Trägerelemente 110, 111 sind hier als sog. Hut-Profile bzw. Doppelt-Hut-Profile ausgebildet, vgl. auch die Fig. 3, wie sie insbesondere bei Lastkraftfahrzeugen 11 der sog. 3,5 t-Klasse eingesetzt werden. Diese Hut- bzw. Doppelt-Hut-Profile weisen eine sehr viel geringere Profilwandstärke als bspw. die im Zusammenhang mit Fig. 1 oben beschriebenen C-Profile auf, die regelmäßig für große Lastkraftfahrzeuge der 10 t- bis 35 t-Klasse eingesetzt werden. Der lichte Abstand 119 der beiden Trägerelemente 110, 111 gemäß der Fig. 2 ist regelmäßig größer als der lichte Abstand der beiden C-Profile, die die Trägerelemente 110, 111 bei den in Fig. 1 dargestellten Lastkraftfahrzeug 11 bilden.

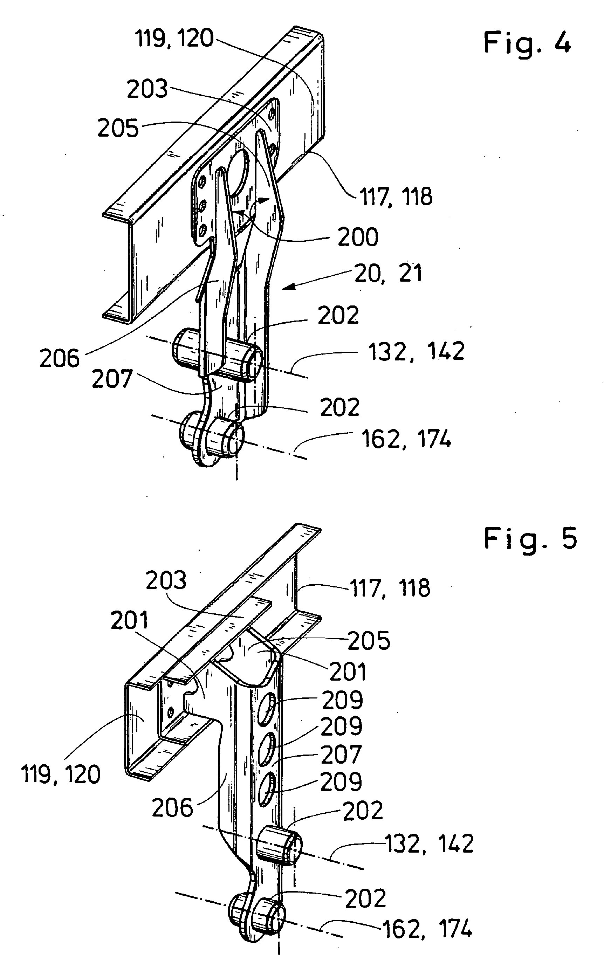

Der größere Abstand der beiden Trägerelemente 110, 111 bei den Lastkraftfahrzeugen 11 gemäß der Fig. 2 erfordert, je nach mit dem erfindungsgemäßen Ladebordwandsystem 10 auszurüstenden Lastkraftfahrzeug 11, Modifikationen der Befestigungselemente 20, 21 gegenüber der plattenförmigen Ausgestaltung der Befestigungselemente 20, 21 gemäß Fig. 1, wenn standardmäßige Ladebordwandsysteme 10 verwendet werden sollen. Die erfindungsgemäßen Modifikationen der Befestigungselemente 20, 21, wie sie in den Fig. 4 bis 7 dargestellt sind, sind gegenüber den lediglich plattenförmigen Ausgestaltungen, die nicht Gegenstand der Erfindung sind, konstruktiv anders ausgebildet. Allerdings könnten auch plattenförmige Befestigungselemente 20, 21 verwendet werden, wie sie in Fig. 1 dargestellt sind, wenn der lichte Abstand 119 der Trägerelemente 110, 111 des betreffenden Lastkraftfahrzeugs 11 dieses zuläßt bzw. das Ladebordwandsystem 10 selbst auf diesen Abstand konstruktiv schon abgestellt ist.

Die Trägerelemente 110, 111 weisen jeweilige Seiten bzw. Seitenflächen 113, 114 auf, die im wesentlichen vertikal zu einem hier nicht dargestellten Untergrund verlaufen, auf dem das Lastkraftfahrzeug 11 normalerweise steht bzw. fährt, vgl, insbesondere die Fig. 2 bis 7.

Wie insbesondere aus den Fig. 2 und 3 ersichtlich ist, sind oberhalb der den Fahrzeugrahmen bildenden Trägerelemente 110, 111, d.h. im wesentlichen vertikal über diesen, jeweils Hilfsrahmen 117, 118 ausgebildet, die hier einen U-profilförmigen Querschnitt aufweisen. Es sei darauf hingewiesen, daß die Hilfsrahmen 117, 118 nicht zwingend einen U-profilförmigen Querschnitt aufweisen müssen, d.h. daß auch andere Querschnittsprofile denkbar sind, bspw. in Form von rechteckigen oder quadratischen Hohlrohren, wie sie faktisch auch durch die Hut- bzw. Doppelt-Hut-Profile gebildet werden, die die Trägerelemente 111, 112 bilden. Ein wesentlicher Teil des erfindungsgemäßen Ladebordwandsystems sind die Befestigungselemente 20, 21, die beidseitig der Hilfsrahmen 117, 118 angebracht bzw. an diesen befestigt werden, vgl. Fig. 2 und insbesondere die Fig. 4 bis 7, aus denen unterschiedliche Ausgestaltungen der Befestigungselemente 20, 21 ersichtlich sind.

Da die Befestigungselemente, die auf je einem Hilfsrahmen 117, 118 angeordnet sind, bis auf den Umstand, daß sie jeweils zueinander spiegelverkehrt gestaltet sind, ansonsten einen identischen Aufbau haben, wird nachfolgend lediglich von Befestigungselement 20, 21 gesprochen. Das Befestigungselement 20, 21 besteht im wesentlichen aus einem U-profilförmig ausgebildeten Körper (U-Profil), wobei dieses Konstruktionsprinzip einheitlich für alle Modifikationen der Befestigungselemente 20, 21 gemäß der Erfindung ist. Beide Schenkel 205, 206 des U-profilformigen Befestigungselementes 20, 21 sind im wesentlichen gleich ausgebildet.

Das U-Profil der Befestigungselemente 20. 21 ist in einer Ebene 17 im wesentlichen parallel zu der durch die Trägerelemente 111, 112 aufgespannten Ebene 19 im Querschnitt U-profilförmig ausgebildet, vgl. die schematisch dargestellten Ebenen 18, 19 in Fig. 2. Das Ende 200, vgl. Fig. 4, über das das Befestigungselement 20, 21 am Hilfsrahmen 117, 118 befestigt ist, weist eine kragarmartige 200 Verschwenkung gegenüber dem Steg 207 des U-Profils auf, womit auf einfache Weise dem Umstand Rechnung getragen werden kann, daß bei bestimmten Lastkraftfahrzeugen, an denen das Ladebordwandsystem 10 befestigt wird, ein größerer lichter Abstand 119 zu überbrücken ist, als es ein festgelegter Standardabstand der Ladebordwandsysteme 10 zuläßt.

Bei den in den Fig. 5 bis 7 dargestellten Befestigungselementen 20, 21 ist der Kragarm 201 derart bemessen, daß er im Gegensatz zur Ausgestaltung des Befestigungselementes 20, 21 gemäß Fig. 4 einen größeren Abstand, bezogen auf den lichten Abstand 119 der beiden Hilfsrahmen 117, 118, zu überbrücken hat, wenn vorgegebene Ladebordwandsysteme 10 verwendet werden sollen, die einen größeren Abstand der Drehpunkte des ersten und zweiten Tragwerks 13, 14 in bezug auf die Befestigung am Lastkraftfahrzeug aufweisen als es seitens des Herstellers des Lastkraftwagens vorgegeben ist.

Die freien Enden der Schenkel 205, 206 können ebenfalls wenigstens teilweise mit einem plattenförmigen Basisteil 208, ähnlich dem des Basisteils bzw. Stegs 209, verbunden sein. Dadurch würde dann ein im Querschnitt rohrförmig ausgebildetes Befestigungselement 20, 21 gebildet.

Am freien Ende 200 des Kragarmes 201 ist ein Befestigungsflansch 203 ausgebildet, über den die Befestigungselemente 20, 21 am Hilfsrahmen 117, 118 mittels einer Bolzen- bzw. einer Schrauben-Mutter-Verbindung (im einzelnen nicht dargestellt) verbunden werden können. Soweit die gesetzlichen Bestimmungen in bestimmten Staaten, in denen die erfindungsgemäßen Ladebordwandsysteme 10 benutzt werden, es zulassen, können auch die Befestigungsflansche 203 durch eine Schweißverbindung mit den jeweiligen Hilfsrahmen 117, 118 verbunden werden.

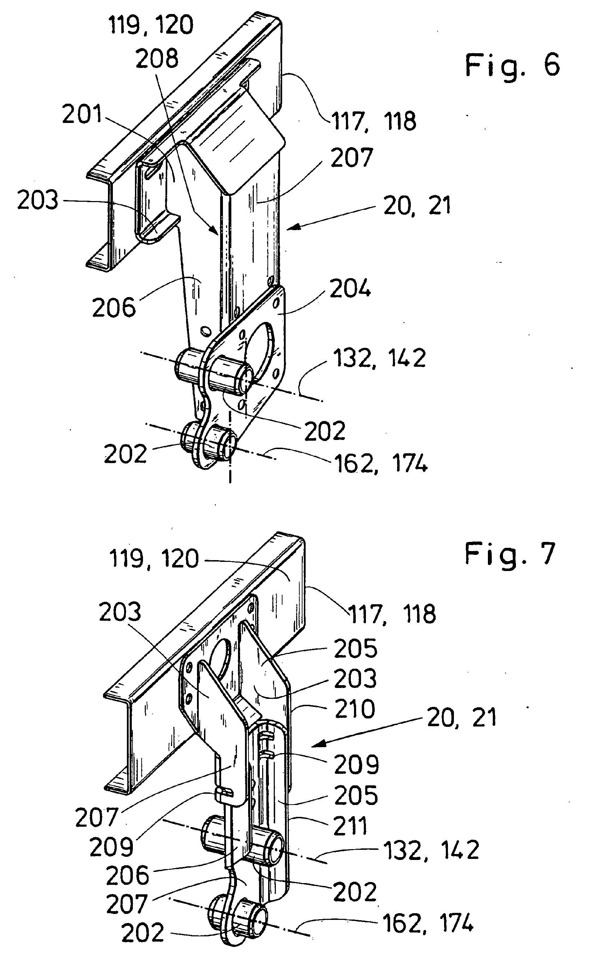

Der Befestigungsflansch 203 kann als flaches, plattenförmiges Element ausgebildet sein, es ist aber auch möglich, dafür zur Erhöhung der Stabilität des Befestigungsflansches 203 diesen im Querschnitt U-profilförmig auszubilden, vgl. insbesondere die Fig. 5 und 6.

Eine Besonderheit des Befestigungselements 20, 21 ist aus Fig. 5 ersichtlich. Dort ist das Befestigungselement 20, 21 über den U-profilförmigen Befestigungsflansch 103 innen am Hilfsrahmen 117, 118, der hier ebenfalls U-profilförmig im Querschnitt ausgebildet ist, befestigt. Die Ausgestaltung des Befestigungselementes 20, 21 gemäß Fig. 5 kann auch so verstanden werden, daß die Hilfsrahmen 117, 118 jeweils um 180° gegenüber der Darstellung von Fig. 2 gedreht auf den Trägerelementen 110, 111 befestigt sind, so daß auch bei dieser Modifikation des Befestigungselementes 20, 21 der Kragarm 201, allerdings von außen in das Profil des Hilfsrahmens 117, 118 hineingreifend, an diesem befestigt wird.

Um die vertikale Höhe der Drehachsen 132, 142 und 162, 174 relativ zu einem Untergrund, bspw. einem Fahrbahnuntergrund, auf dem das Lastkraftfahrzeug steht, im Hinblick auf das Ladebordwandsystem geeignet anpassen zu können, weist das Befestigungselement 20, 21 eine Mehrzahl im wesentlichen vertikal übereinander angeordneter Löcher, vgl. Fig. 5, auf, die in einem vorbestimmten Raster zueinander angeordnet sind. Diese Löcher können der Aufnahme der Achsbuchsen 202 dienen, über die die beiden Tragwerke 13, 14 mit den Befestigungselementen 20, 21 auf bekannte Weise drehbar verbunden werden. Die besagten vertikal übereinander angeordneten Löcher des Befestigungselementes 20, 21 bilden faktisch Rastmittel 209, mittels denen der vertikale Abstand der Achsen 132, 142 und 162, 174 gegenüber dem Straßenuntergrund, auf dem das Fahrzeug 11 steht bzw. fährt, durch entsprechende Wahl der Positionierung der Achsbuchsen 202 in den Löchern eingestellt werden kann.

Es ist aber auch möglich, vgl. Fig. 5, das Befestigungselement 20, 21 zweigeteilt, d.h. aus zwei Befestigungselementen 210, 211 bestehend, auszubilden, die, beide im Querschnitt U-profilförmig ausgebildet, mit ihren Pröfilabmessungen derart aufeinander abgestimmt sind, und so, beide Befestigungsteile 210, 211 führend ineinander gleitend, relativ zueinander verschoben werden können.

Um nach geeigneter Verstellung der Befestigungsteile 210, 211 diese in der gewünschten verstellten Position relativ zueinander fixieren zu können, vgl. Fig. 7, sind Rastmittel 209 vorgesehen, die in Form von geringfügigen Ausbuchtungen, die bspw. in einem Befestigungsteil 211 angeordnet sind, ausgebildet sind, die in die entsprechende Ausnehmungen bzw. Löcher eingreifen, die in dem mit dem einen Befestigungsteil 211 zusammenwirkenden anderen Befestigungsteil 210 ausgebildet sind, d.h. in diese Löcher rastend eingreifen. In der geeignet eingestellten Position der Befestigungsteile 210, 211 zueinander können dann beide Befestigungsteile 210, 211 durch Bolzen- bzw. Schrauben-Mutter-Verbindungen miteinander verbunden werden, so daß beide Befestigungsteile 210, 211 dann zueinander fixiert sind.

Eine Besonderheit des Befestigungselementes 20, 21 ist aus Fig. 6 ersichtlich. Dort sind die Drehachsen 132, 142; 162, 174 des ersten und des zweiten Tragwerks 13, 14 im jeweiligen Befestigungselement 20, 21 auf einem gesonderten plattenförmigen Befestigungsträger 204 ausgebildet. Der Befestigungsträger 204 und das entsprechende andere freie Ende des Befestigungselementes 20, 21 können mit einem jeweiligen gesonderten Lochraster versehen sein, so daB der Befestigungsträger 204 sowohl in vertikaler Richtung, bezogen auf die Darstellungen der Zeichnungen, als auch in Fahrzeuglängsrichtung, verschoben, geeignet positioniert und fixiert werden kann. Dadurch ist es möglich, sowohl eine Feinabstimmung der vertikalen Höhe der Befestigung des Ladebordwandsystems 10 relativ zum Fahrzeug 11 einzustellen, als auch in Fahrzeuglängsrichtung. Diese verbindung kann ebenfalls mittels einer Bolzen- oder einer Schrauben-Mutter-Verbindung vorgenommen werden.

Bei allen hier vorangehend beschriebenen Ausgestaltungen des Ladebordwandsystems 10 bzw. der Befestigungselemente 20, 21 ist das jeweilige Befestigungselement 20, 21 ausschließlich am Hilfsrahmen 117, 118 befestigt. Die Befestigung der Befestigungselemente 20, 21 am Hilfsrahmen 117, 118 erfolgt regelmäßig an vertikal verlaufenden Seiten 119, 120 der Hilfsrahmen, was aber letztlich von der Ausbildung des Profils der Hilfsrahmen 117, 118 abhängt, so daß die in den Fig. dargestellte Befestigung hier nur als eine von vielen Möglichkeiten zu verstehen ist, über die die Befestigungselemente 20, 21 am Hilfsrahmen 117, 118 befestigt werden können.

Es ist aber auch möglich, zusätzlich zur Befestigung der Befestigungselemente 20, 21 am Hilfsrahmen 117, 118 diese auch an den Trägerelementen 111, 112 zu befestigen, um ggf. die Stabilität der Befestigung des Ladebordwandsystems 10 am Fahrzeug 11 zu erhöhen.

### Bezugszeichenliste

- 10: Ladebordwandsystem
- 11: Fahrzeug
- 110: Trägerelement (Fahrzeugrahmen)
- 111: Trägerelement (Fahrzeugrahmen)
- 113: Seite Trägerelement
- 114: Seite Trägerelement
- 115: Stützelement
- 116: Stützbereich
- 117: Hilfsrahmen
- 118: Hilfsrahmen
- 119: Abstand
- 12: Hubtragwerk
- 13: erstes Tragwerk
- 132: Drehachse
- 14: zweites Tragwerk
- 142: Drehachse
- 15: Ladebordwand
- 16: Hubaktuator
- 162: Drehachse
- 17: Klappaktuator
- 174: Drehachse
- 18: Ebene (Befestigungselement)
- 19: Ebene (gebildet durch die Trägerelemente)
- 20: Befestigungselement
- 200: Ende (Befestigungselement)
- 201: Kragarm
- 202: Achsbuchse
- 203: Befestigungsflansch
- 204: Befestigungsträger
- 205: Schenkelteil
- 206: Schenkelteil
- 207: Basisteil / Steg
- 208: Basisteil
- 209: Rastmittel
- 210: Befestigungsteil
- 211: Befestigungsteil
- 21: Befestigungselement

## Patentansprüche

1. Ladebordwandsystem (10) zur Befestigung an Fahrzeugen (11), insbesondere Lastkraftfahrzeugen, wobei zwei im wesentlichen parallel, beabstandete Trägerelemente (111; 112) einen Fahrzeugrahmen bilden, umfassend wenigstens ein im wesentlichen parallelogrammförmiges, aus zwei im wesentlichen parallel voneinander beabstandeten Tragwerken (13, 14) bestehendes Hubtragwerk (12), eine im wesentlichen plattenförmige Ladebordwand (15) zum Heben und Absenken einer Last und wenigstens einen Hubaktuator (16) zum Heben und Senken der Ladebordwand (15), und wobei die Befestigung des ersten und des zweiten Tagwerks (13, 14) über jeweils ein gesondertes Befestigungselement (20; 21) erfolgt, wobei das Befestigungselement (20; 21) an Hilfsrahmen (117; 118) befestigbar ist, die im wesentlichen vertikal oben auf den Trägerelementen (111; 112) befestigt sind, **dadurch gekennzeichnet, daß** das Befestigungselement (20; 21) im am Fahrzeug (11) befestigbaren Zustand in einer Ebene (18) im wesentlichen parallel zu der durch die Trägerelemente (111; 112) aufgespannten horizontalen Ebene (19) im Querschnitt nach Art eines U-Profils ausgebildet ist, das wenigstens ein plattenförmiges Basisteil (207) und wenigstens zwei von diesem winklig abstehende Schenkelteile (205, 206) aufweist, wobei das Befestigungselement (20; 21) ausschließlich an den Hilfsrahmen (117; 118) befestigbar ist, und wobei das Befestigungselement (20; 21) an dem Ende (200), über das es am Hilfsrahmen (117; 118) befestigbar ist, kragarmartig (201) ausgebildet ist.

2. Ladebordwandsystem nach Anspruch 1, **dadurch gekennzeichnet, daß** am freien Ende (200) des Kragarmes (201) ein Befestigungsflansch (203) ausgebildet ist.

3. Ladebordwandsystem nach Anspruch 2, **dadurch gekennzeichnet, daß** der Befestigungsflansch (203) als flaches, plattenförmiges Element ausgebildet ist.

4. Ladebordwandsystem nach Anspruch 2, **dadurch gekennzeichnet, daß** der Befestigungsflansch (203) im Querschnitt U-profilförmig ausgebildet ist.

5. Ladebordwandsystem nach einem oder mehreren der Ansprüche 1 bis 4, **dadurch gekennzeichnet, daß** die freien Enden der Schenkelteile (205, 206) wenigstens teilweise mit einem zum Basisteil (207) im wesentlichen parallelen Basisteil (208) zur Bildung eines im wesentlichen rohrförmigen Befestigungselementes (20; 21) versehen sind.

6. Ladebordwandsystem nach einem oder mehreren der Ansprüche 1 bis 5, **dadurch gekennzeichnet, daß** das Befestigungselement (20; 21) im wesentlichen vertikal zu der durch die Trägerelemente (111; 112) gebildeten Ebene verstellbar ausgebildet ist.

7. Ladebordwandsystem nach Anspruch 6, **dadurch gekennzeichnet, daß** das Befestigungselement (20; 21) aus zwei Befestigungsteilen (210, 211) besteht, die gegeneinander durch Verschiebung verstellbar sind.

8. Ladebordwandsystem nach einem oder beiden der Ansprüche 6 oder 7, **dadurch gekennzeichnet, daß** das Befestigungselement (20; 21) Rastmittel (209) aufweist, mittels der es rastend verstellbar ist.

9. Ladebordwandsystem nach einem oder mehreren der Ansprüche 1 bis 8, **dadurch gekennzeichnet, daß** die Drehachsen (132, 142; 162, 174) des ersten und zweiten Tragwerks (13, 14) im jeweiligen Befestigungselement (20; 21) auf einem plattenförmigen Befestigungsträger (204) ausgebildet sind, der auf dem Befestigungselement (13, 14) lösbar befestigbar ist.

## Claims

1. Loading tailgate system (10) for attachment to vehicles (11), in particular heavy goods vehicles, wherein two carrier elements (111; 112) spaced apart from each other in a substantially parallel manner form a vehicle frame, comprising at least one substantially parallelogram-shaped lifting structure (12) consisting of two load bearing structures (13, 14) spaced apart from each other in a substantially parallel manner, a substantially panel-like loading tailgate (15) for raising and lowering a load and at least one stroke actuator (16) for raising and lowering the tailgate (15), and wherein the fixing of the first and the second load bearing structures (13, 14) is realised in each case through a separate fixing element (20; 21), wherein the fixing element (20; 21) can be fixed to sub-frames (117; 118) which are fixed substantially vertically above on the carrier elements (111; 112), **characterised in that** the fixing element (20; 21) in the state in which it can be fixed to the vehicle (11) is formed in a plane (18) substantially parallel to the horizontal plane passed through by the carrier elements (111; 112) with a cross-section in the form of a U-shaped profile which comprises at least one plate-like base part (207) and at least two arm parts (205, 206) standing away from it at an angle, wherein the fixing element (20; 21) can be fixed exclusively to the sub-frames (117; 118) and wherein the fixing element (20; 21) is formed at the end (200) via which it can be fixed to the sub-frame (117; 118) in the manner of a cantilever (201).

2. Loading tailgate system according to claim 1, **characterised in that** a fixing flange (203) is formed at the free end (200) of the cantilever (201).

3. Loading tailgate system according to claim 2, **characterised in that** the fixing flange (203) is formed as a flat, plate-like element.

4. Loading tailgate system according to claim 2, **characterised in that** the fixing flange (203) is formed with a U-profile-shaped cross-section.

5. Loading tailgate system according to one or more of the claims 1 to 4, **characterised in that** the free ends of the arm parts (205, 206) are equipped at least partially with a base part (208) substantially parallel to the base part (207) for the formation of an essentially tubular fixing element (20; 21).

6. Loading tailgate system according to one or more of the claims 1 to 5, **characterised in that** the fixing element (20; 21) is formed so as to be adjustable substantially vertically to the plane formed by the carrier elements (111; 112).

7. Loading tailgate system according to claim 6, **characterised in that** the fixing element (20; 21) consists of two fixing parts (210, 211) which can be adjusted against each other through displacement.

8. Loading tailgate system according to one or both of the claims 6 or 7, **characterised in that** the fixing element (20; 21) comprises engaging means, by means of which it can be adjusted so as to engage.

9. Loading tailgate system according to one or more of the claims 1 to 8, **characterised in that** the rotation axes (132, 142; 162 174) of the first and second load bearing structures (13, 14) are formed in the respective fixing element (20; 21) on a plate-like fixing support (204) which can be detachably fixed on the fixing element (13, 14).

## Revendications

1. Système d'hayon élévateur (10) destiné à être fixé sur des véhicules (11), en particulier des poids lourds, dans lequel deux éléments de support (111, 112) espacés et sensiblement parallèles constituent un cadre de véhicule, comprenant au moins un appareillage de levée et de support (12) sensiblement en forme de parallélogramme composé de deux appareils de support (13, 14) espacés l'un de l'autre et sensiblement parallèles, un hayon élévateur sensiblement en forme de plaque (15) pour lever et baisser une charge et au moins un actionneur de levée (16) pour lever et abaisser le hayon élévateur (15) et dans lequel la fixation du premier et du deuxième appareillages de support (13, 14) est réalisée respectivement au moyen d'un organe de fixation séparé (20, 21), l'organe de fixation (20 , 21) étant susceptible d'être fixé sur des cadres auxiliaires (117 , 118) qui sont fixés, de façon sensiblement verticale, au-dessus des éléments de support (111 , 112), **caractérisé en ce que** l'organe de fixation (20, 21) dans l'état assemblé au véhicule (11), est réalisé, dans un plan (18) sensiblement parallèle au plan horizontal (19) passant par les éléments de support (111 , 112) avec en section transversale, un profil du type en U, avec au moins une partie de base (207) en forme de plaque et au moins deux parties de côté latéral (205, 206) faisant saillie selon un angle à partir de celle-ci, l'organe de fixation (20 , 21) étant susceptible d'être monté exclusivement sur les cadres auxiliaires (117 , 118) et l'organe de fixation (20 , 21) étant conformé, sur l'extrémité (200) sur laquelle il est susceptible d'être fixé sur le cadre auxiliaire (117 , 118) sous forme de bras en porte-à-faux (201).

2. Système d'hayon élévateur selon la revendication 1, **caractérisé en ce qu'**une bride de fixation (203) est formée sur l'extrémité libre (200) du bras en porte-à-faux (201).

3. Système d'hayon élévateur selon la revendication 2, **caractérisé en ce que** la bride de fixation (203) est réalisée sous forme d'un élément en forme de plaque plane.

4. Système d'hayon élévateur selon la revendication 2, **caractérisé en ce que** la bride de fixation (203) présente, en section transversale, un profil en forme de U.

5. Système d'hayon élévateur selon l'une ou plusieurs des revendications 1 à 4, **caractérisé en ce que** les extrémités libres des parties de côté latéral (205, 206) sont munies au moins partiellement d'une partie de base (208) sensiblement parallèle à la partie de base (207) pour constituer un organe de fixation (20 , 21) sensiblement tubulaire.

6. Système d'hayon élévateur selon l'une ou plusieurs des revendications 1 à 5, **caractérisé en ce que** l'organe de fixation (20 , 21) est formée réglable sensiblement verticalement par rapport au plan passant par les éléments de support (111 , 112).

7. Système d'hayon élévateur selon la revendication 6, **caractérisé en ce que** l'organe de fixation (20, 21) est composé de deux parties de fixation (210, 211) qui sont susceptibles d'être réglées l'une par rapport à l'autre par déplacement.

8. Système d'hayon élévateur selon l'une des revendications 6 ou 7 ou les deux revendications 6 et 7, **caractérisé en ce que** l'organe de fixation (20 , 21) présente des moyens formant cran d'arrêt (209) permettant son réglage avec encliquetage.

9. Système d'hayon élévateur selon l'une ou plusieurs des revendications 1 à 8, **caractérisé en ce que** les axes de rotation (132, 142 , 162, 174) du premier et deuxième appareillages de support (13, 14) dans l'organe de fixation respectif (20, 21) sont réalisés sur un support de fixation (204) en forme de plaque qui est susceptible d'être fixée de façon amovible sur l'organe de fixation (13, 14).
